# EUROPEAN PATENT APPLICATION

(11) **EP 4 671 060 A1**
(43) Date of publication of application: **31.12.2025**
(21) Application number: 25183989.0
(22) Date of filing: 19.06.2025
(51) Int. Cl.: B60T 8/172, B60W 40/064, B60W 50/00, B60W 50/14

(54) **HYDROPLANING DETECTION SYSTEM AND METHOD**

(30) Priority: 26.06.2024 US 202463664415 P; 06.05.2025 US 202519200212
(71) Applicant: The Goodyear Tire & Rubber Company, Akron, OH 44316 (US)
(72) Inventor: Labella, Mario, L-7750 Colmar-Berg (LU); Balaga, Sanjay Raghav, L-7750 Colmar-Berg (LU); SINGH, Kanwar Bharat, L-7363 Lorentzweiler (LU)
(74) Representative: Kutsch, Bernd

(57) **Abstract**

A hydroplaning detection system (10) and method for a vehicle (12), the vehicle (12) being supported by at least one tire (14) and including a communication system (28) is disclosed. The system (10) comprises a processor (32) in electronic communication with the communication system (28) and a warning module (44) in electronic communication with the processor (32). The warning module (44) is configured to receive data from vehicle-based sensors (30) that are in electronic communication with the communication system (28) and to generate an expected slip, a grip utilization, a drag force, and a calculated slip, to receive data from a tire sensor unit (26) that is configured for electronic communication with the communication system (28), and to determine a confidence level by comparing the generated drag force to an expected drag. The warning module (44) includes a hydroplaning detection logic (82) that is configured to receive the expected slip, the grip utilization, the drag force, the calculated slip, and the confidence level and to generate a hydroplaning detection warning and a warning confidence level, and the warning module (44) is configured to communicate the warning and the warning confidence level to at least one of a vehicle control system and an operator of the vehicle (12) for action by the at least one of the vehicle control system and the operator of the vehicle (12).

## Description

### Field of the Invention

The invention relates generally to vehicle and tire monitoring systems and methods. More particularly, the invention relates to systems and methods that measure and collect data to detect vehicle and/or tire conditions. The invention is directed to a system and to a method that employs data from multiple sources to detect hydroplaning situations in real time for use in vehicle control systems and driver assistance systems.

### Background of the Invention

The condition of the road on which a vehicle is traveling affects performance of the vehicle and the tires that support the vehicle. As a result, it is beneficial to determine the condition of the road as the vehicle travels. If the road condition can be determined, detection of the condition may be employed in a vehicle control system to improve handling and performance of the vehicle. However, accurate and reliable detection of road conditions for use by such systems has been difficult to achieve.

One condition that can affect vehicle performance and safety is hydroplaning, which is also referred to as aquaplaning. For the purpose of convenience, reference herein shall be made to hydroplaning with the understanding that such reference includes aquaplaning. Hydroplaning occurs when a layer of water between the tires and the road causes a reduction in contact of the tires with the road surface. A reduction in contact of the tires with the road surface may undesirably reduce handling and/or performance of the vehicle.

When hydroplaning is detected, vehicle control systems may be actuated to improve handling and performance of the vehicle. Such vehicle control systems include antilock braking systems (ABS), traction control systems, suspension control systems, steering control systems, and the like. However, vehicle control systems typically do not detect hydroplaning.

In addition, if a driver or operator of the vehicle is alerted when hydroplaning occurs, the driver may be able to adjust vehicle operating conditions, such as vehicle speed, to improve handling and performance of the vehicle.

As a result, there is a need in the art for a system that accurately and reliably detects hydroplaning situations in real time.

### Summary of the Invention

The invention relates to a system in accordance with claim 1 and to a method in accordance with claim 15.

Dependent claims refer to preferred embodiments of the invention.

According to a preferred aspect of the invention, a hydroplaning detection system for a vehicle is provided. The vehicle is supported by at least one tire and includes a communication system. The hydroplaning detection system includes a processor in electronic communication with the communication system and a warning module in electronic communication with the processor. The warning module receives data from vehicle-based sensors that are in electronic communication with the communication system and generates an expected slip, a grip utilization, a drag force, and a calculated slip. The warning module receives data from a tire sensor unit that is in electronic communication with the communication system and determines a confidence level by comparing the generated drag force to an expected drag. The warning module includes a hydroplaning detection logic that receives the expected slip, the grip utilization, the drag force, the calculated slip, and the confidence level and generates a hydroplaning detection warning and a warning confidence level. The warning module communicates the warning and the warning confidence level to at least one of a vehicle control system and an operator of the vehicle for action by the vehicle control system or the operator of the vehicle.

### Brief Description of the Drawings

The invention will be described by way of example and with reference to the accompanying drawings, in which:
Figure 1 is a perspective view of an exemplary vehicle employing the hydroplaning detection system of the present invention;
Figure 2 is a plan view of the vehicle shown in Figure 1, with certain portions of the vehicle represented by dashed lines;
Figure 3 is a schematic diagram of an exemplary embodiment of a hydroplaning detection system of the present invention;
Figure 4 is a schematic diagram of an aspect of the exemplary embodiment of the hydroplaning detection system of the present invention shown in Figure 3;
Figure 5 is a schematic diagram of another aspect of the exemplary embodiment of the hydroplaning detection system of the present invention shown in Figure 3;
Figure 6 is a schematic diagram of a further aspect of the exemplary embodiment of the hydroplaning detection system of the present invention shown in Figure 3;
Figure 7 is a schematic diagram of another aspect of the exemplary embodiment of the hydroplaning detection system of the present invention shown in Figure 3;
Figure 8 is a schematic diagram of an optional feature of the exemplary embodiment of the hydroplaning detection system of the present invention shown in Figure 3;
Figure 9 is a schematic diagram of an aspect of the optional feature of the exemplary embodiment of the hydroplaning detection system of the present invention shown in Figure 8; and
Figure 10 is a schematic perspective view of the vehicle shown in Figure 1 with a representation of data transmission to a cloud-based server and to a display device;

Similar numerals refer to similar parts throughout the drawings.

### Definitions

"Axial" and "axially" means lines or directions that are parallel to the axis of rotation of the tire.

"CAN bus" or "CAN bus system" is an abbreviation for controller area network system, which is a vehicle bus standard designed to allow microcontrollers and devices to communicate with each other within a vehicle without a host computer. CAN bus is a message-based protocol, designed specifically for vehicle applications.

"Circumferential" means lines or directions extending along the perimeter of the surface of the annular tread perpendicular to the axial direction.

"Equatorial centerplane (CP)" means the plane perpendicular to the tire's axis of rotation and passing through the center of the tread.

"Footprint" means the contact patch or area of contact created by the tire tread with a flat surface as the tire rotates or rolls.

"Inboard side" means the side of the tire nearest the vehicle when the tire is mounted on a wheel and the wheel is mounted on the vehicle.

"Lateral" means an axial direction.

"Net contact area" means the total area of ground contacting tread elements between the lateral edges around the entire circumference of the tread of the tire divided by the gross area of the entire tread between the lateral edges.

"Outboard side" means the side of the tire farthest away from the vehicle when the tire is mounted on a wheel and the wheel is mounted on the vehicle.

"Radial" and "radially" means directions radially toward or away from the axis of rotation of the tire.

"Slip" is the relative motion between the tire and the road surface.

### Detailed Description of Preferred Embodiments of the Invention

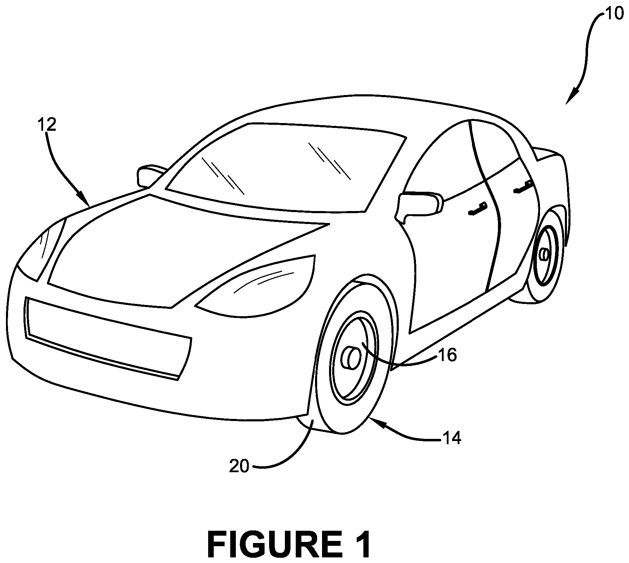

An exemplary embodiment of the hydroplaning detection system 10 of the present invention is indicated in Figures 1 through 10. Turning to Figure 1, a vehicle 12 is supported by tires 14. While the vehicle 12 is depicted as a passenger vehicle or car, the invention is not to be so restricted. The principles of the invention find application in other vehicle categories such as sport utility vehicles, light trucks, heavy-duty or commercial trucks, buses, and off-road vehicles, in which a vehicle may be supported by more or fewer tires than shown in Figure 1.

The tires 14 are of conventional construction, and each tire is mounted on a respective wheel or rim 16 as known to those skilled in the art. Each tire 14 includes a pair of sidewalls that extend to a circumferential, ground-contacting tread 20. When the tire is mounted on the wheel 16, an internal cavity is formed, which is filled with a pressurized fluid, such as air.

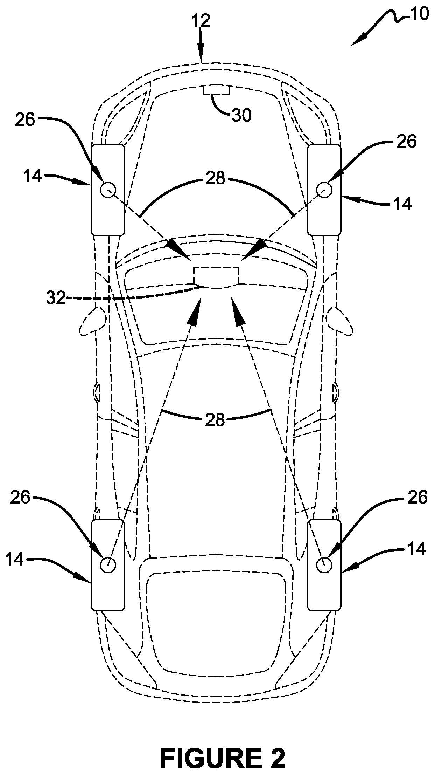

Turning to Figure 2, a sensor unit 26 preferably is mounted to each tire 14 in the internal cavity by means known to those skilled in the art. The sensor unit 26 measures certain characteristics of the tire 14, including tire pressure and temperature. For this reason, the sensor unit 26 preferably includes a pressure sensor and a temperature sensor, and may be of any known configuration, such as a tire pressure management system (TPMS) sensor, and will be referred to as a tire sensor unit or a tire sensor. The tire sensor unit 26 preferably also includes electronic memory capacity for storing identification (ID) information for each tire 14, known as tire ID information. It is to be understood that the tire sensor unit 26 may be a single unit, or may include more than one unit, and the sensor unit may be mounted on any component of the tire 14.

The tire ID information may include or be correlated to specific data for each tire 14, including: a position of the tire on the vehicle 12; tire size, such as rim size, width, and outer diameter; tire type, such as all weather, summer, winter, off-the-road, and the like; tire segment, which is the specific product line to which the tire belongs; predetermined traction or weather parameters, such as a three-peak snowflake indicator for winter tires (3PSF); Department of Transportation (DOT) code; wet grip index, which is a predetermined value based on a standardized test; tire model; manufacturing location; manufacturing date; treadcap code, which includes or correlates to a compound identification; a mold code that includes or correlates to a tread structure identification; a tire footprint shape factor (FSF); a mold design drop; a tire belt/breaker angle; and/or an overlay material. The tire ID information may also correlate to a service history or other information to identify specific features and parameters of each tire 14, as well as mechanical characteristics of the tire, such as cornering parameters, spring rate, load-inflation relationship, and the like.

The tire sensor unit 26 preferably also includes a sensor for determination of load on the tire 14, such as a strain sensor, a stress sensor, a deflection sensor, and/or a deformation sensor. The tire sensor unit 26 preferably also includes an accelerometer that measures acceleration of the tire 14 along three (3) axes. As described above, the load sensor and the accelerometer may be integrated into a single unit in the tire sensor unit 26, or may include more than one unit, and may be mounted on any component of the tire 14.

The vehicle 12 includes a central communication system 28 that enables electronic communication with the tire sensor units 26 and sensors 30 that are mounted on the vehicle, and may be a wired or a wireless system. By way of example, reference shall be made to a CAN bus system 28, with the understanding that such reference includes any central electronic communication system for a vehicle, whether it is physically incorporated into the vehicle 12 or is cloud-based. Aspects of the hydroplaning detection system 10 preferably are executed on a processor 32 that is accessible through the vehicle CAN bus 28. The CAN bus 28 enables the processor 32, and accompanying memory, to receive input of data from the sensors 26 and 30 and to interface with other electronic components.

Examples of vehicle-based sensors 30 and electronic components that are accessible through the vehicle CAN bus 28 include: an engine control module (ECM), which measures measure engine parameters such as revolutions per minute (RPM), temperature, and emissions; a transmission control module (TCM), which measures transmission operation for the vehicle 12, including gear shifting, clutch operation and position (e.g., engaged, disengaged), and others; a throttle position sensor (TPS), which measures throttle driver throttle input position; a wheel speed sensor, which measures wheel speed and may be included in an Antilock Braking Sensor (ABS) device or may be separate; a mass air flow (MAF) sensor, which measures the amount of air entering the engine; a manifold absolute pressure (MAP) sensor, which measures intake manifold pressure; a vehicle speed sensor (VSS), which measures vehicle speed; a crankshaft position sensor (CPS), which measures a position of the crankshaft for ignition timing, and a camshaft position sensor (CMP), which measures camshaft position. Other examples of sensors 30 and electronic components that are accessible through the vehicle CAN bus 28 include vehicle-mounted cameras, steering angle sensors, knock sensors, fuel level sensors, rain sensors, light sensors, parking sensors, blind spot sensors, parking sensors, infrared sensors, light detection and ranging sensors, and others.

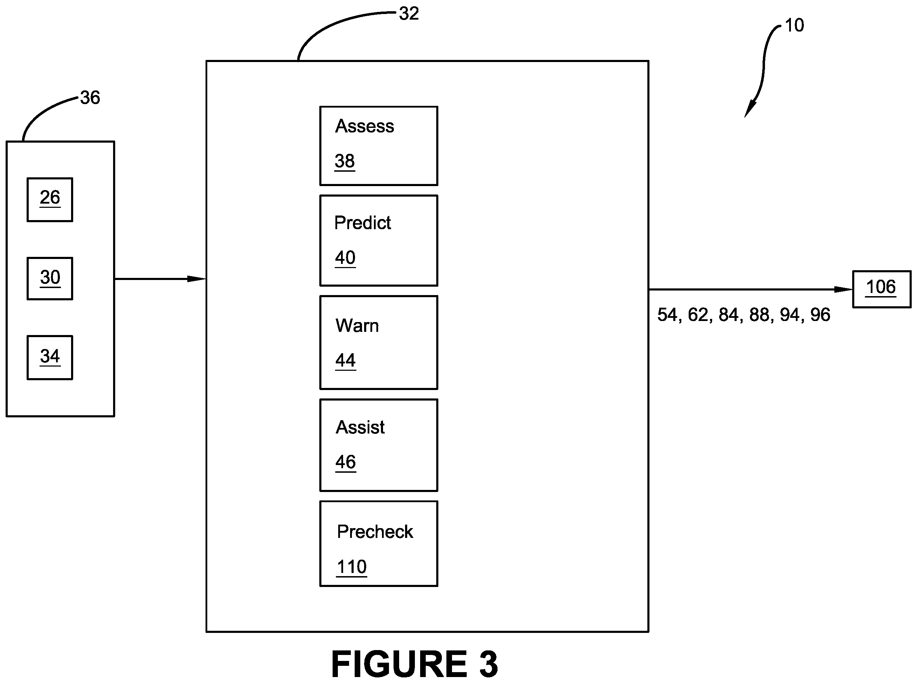

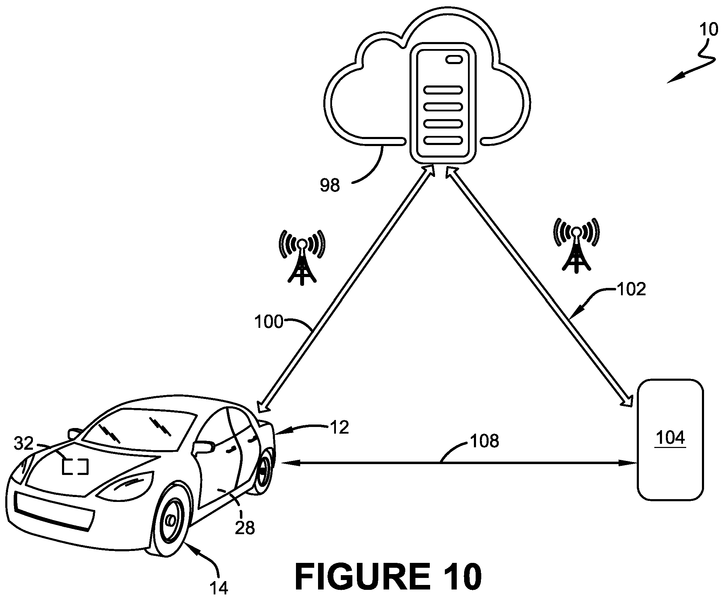

Referring now to Figure 3, the hydroplaning detection system 10 includes multiple modules, which may be stored on or in electronic communication with the local vehicle-mounted processor 32 or a remote Internet or cloud-based processor (Figure 10), as will be described below, and which receive input data 36. The input data 36 includes data from the tire sensor units 26, vehicle-mounted sensors 30, and additional data sources 34, which will be described in greater detail below. The modules of the hydroplaning detection system 10 preferably include an assessment module 38, a prediction module 40, a warning module 44, and an assistance module 46.

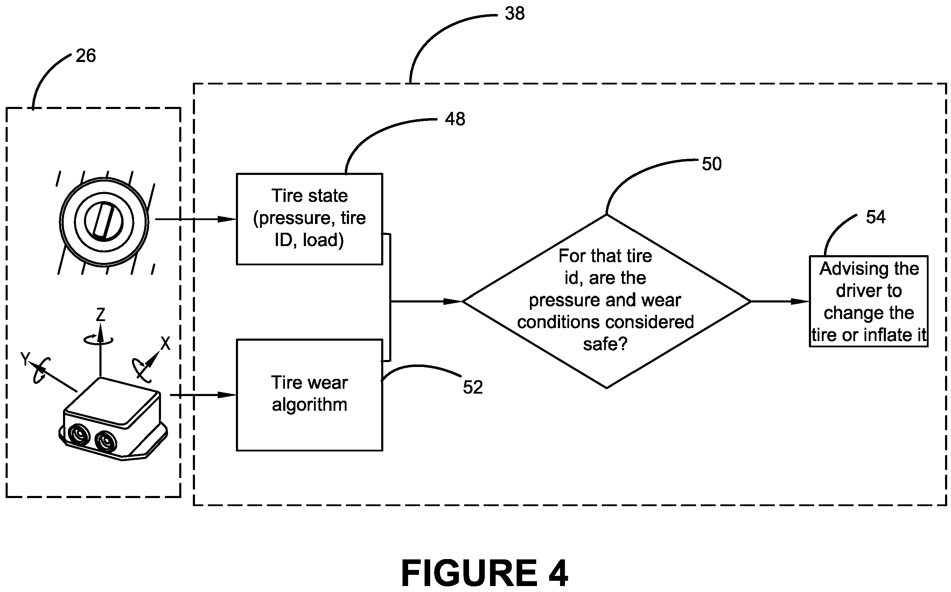

Turning to Figure 4, the assessment module 38 of the hydroplaning detection system 10 provides initial feedback on the state of the tire 14 prior to or at start of operation of the vehicle 12. Data from the tire sensor units 26, including tire identification, tire pressure, and tire load are used in a state assessment 48 to determine the state of the tire 14. More particularly, the tire identification enables prior hydroplaning characteristic data stored on the processor 32 for tires of the same type as the tire 14 to be prepared in the state assessment 48 and considered in an assessment decision 50. The pressure indicated by the tire sensor unit 26 is input into the state assessment 48 and considered in the assessment decision 50 to determine if the tire is within a recommended pressure range.

A load of the tire 14 may optionally be prepared in the state assessment 48 and considered in the assessment decision 50 to determine if the tire is within a recommended load range. The load of the tire 14 may be measured by a sensor in the tire sensor unit 26, such as a strain sensor, a stress sensor, a deflection sensor, and/or a deformation sensor, or may be calculated by a load estimation technique, such as shown and described in U.S. Patent Numbers 9,120,356; 9,222,854; 9,874,496; 10,048,170; 10,245, 906; 11,298,991; and in U.S. Patent Application Publication Number 2023/0060281.

A wear assessment 52 provides a wear state of the tire 14 that is considered in the assessment decision 50. The tire wear state of the tire 14 may be measured by a wear sensor in the tire sensor unit 26, or may be determined using the accelerometer in the tire sensor unit with a wear estimation technique, such as shown and described in U.S. Patent Numbers 9,050,864; 9,428,013; 9,821,611; 9,873,293; 10,603,962; 11,644,386; and in U.S. Patent Application Publication Number 2023/0294459.

The assessment decision 50 considers prior hydroplaning characteristic data for tires of the same type as the tire 14, whether the pressure indicated by the tire sensor unit 26 is within a recommended pressure range, whether the load of the tire 14 is within a recommended load range, and whether the wear state of the tire 14 is within a recommended wear range. If prior hydroplaning characteristics are less than favorable, the pressure is outside the recommended range, the load of the tire 14 is outside the recommended range, and/or the wear state of the tire is outside the recommended range, a notification 54 is communicated from the assessment module 38.

Preferably, a weighting factor is assigned to each of these considerations, which are then normalized and summed. By way of example, if the sum of the weighting factors is at or above a predetermined value, such as two (2), the initial assessment is that the state of the tire 14 may be more prone to hydroplaning and is undesirable, and the notification 54 is communicated from the assessment module 38 through the CAN bus system 28 to one or more vehicle control systems 106 and/or to an operator of the vehicle 12 that the tire 14 needs to be inflated or replaced, as will be described in greater detail below. If the sum of the weighting factors is below the predetermined value, the initial assessment if that the state of the tire 14 is acceptable, and no notification 54 is communicated from the assessment module 38.

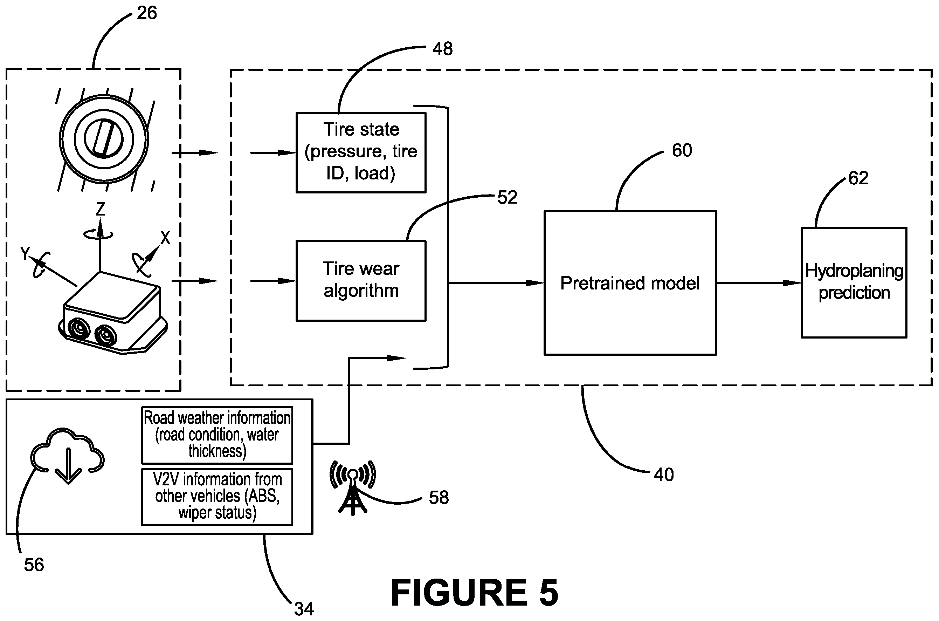

With reference to Figure 5, the prediction module 40 of the hydroplaning detection system 10 provides a prediction of hydroplaning based on road conditions and the condition of the tire 14 before and during operation of the vehicle 12. The prediction module 40 also employs the state assessment 48 and the wear assessment 52. Preferably, data from the tire sensor units 26, including tire identification, tire pressure, and tire load are used in the state assessment 48 to determine the state of the tire 14 as described above. In addition, the wear assessment 52 provides a wear state of the tire 14 as described above.

Additional data sources 34 that are employed in the prediction module 40 include road weather information, as indicated by a road condition and an amount of moisture on the road, and vehicle-to-vehicle (V2V) status information, which may include activation of ABS and/or wiper blades on other vehicles in the same geographic area. Preferably, the additional data sources 34 are communicated to the processor 32 (Figure 3) from a remote Internet or cloud-based processor 56 through wireless data transmission 58.

A prediction model 60 of the prediction module 40 receives the state of the tire 14 from the state assessment 48, the wear state of the tire from the wear assessment 52, and the information from the additional data sources 34. Preferably, the prediction model 60 includes a linear scaling function, which multiplies each data value by a constant to provide an assessment of the data points relative to one another and to predetermined thresholds. The prediction model 60 thus determines if hydroplaning is likely from the assessment of the condition of the tire 14, based on the state assessment 48 and the wear assessment 52, and the condition of the road, based on the additional data sources 34, relative to predetermined threshold values.

If hydroplaning is likely, the prediction model 60 then employs linear regression to determine a safe speed threshold for the vehicle 12. A safe speed notification 62 is communicated from the prediction module 40 through the CAN bus system 28 to one or more vehicle control systems 106 and/or to an operator of the vehicle 12 to adjust the speed of the vehicle, as will be described in greater detail below.

A prediction module 40 and prediction model 60 are also shown and described in U.S. Patent Number 9,963,146.

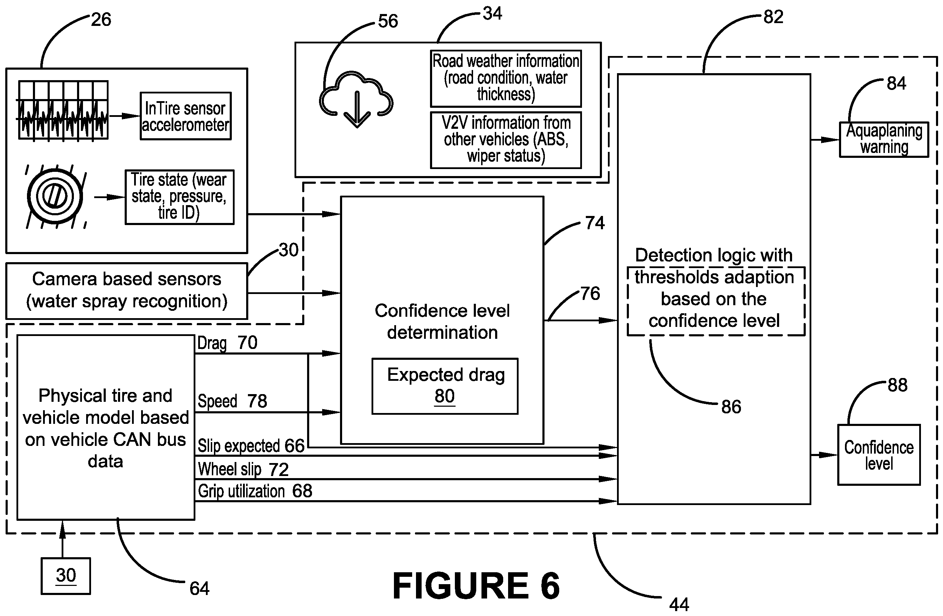

Referring to Figure 6, the warning module 44 of the hydroplaning detection system 10 employs information from vehicle-based sensors 30, which is enriched with information from the tire sensor unit 26 and additional information to detect hydroplaning situations during operation of the vehicle 12. The warning module 44 also includes a determination of the confidence level to improve the accuracy of the system 10.

More particularly, the warning module 44 inputs information from vehicle-based sensors 30 into a vehicle model 64 to generate an expected slip 66, a grip utilization 68, a drag force 70, and a calculated slip 72, as shown and described in U.S. Patent Application Serial Number 63/608,866 entitled "Systems and Methods for Hydroplaning Detection" and filed on December 12, 2023.

The warning module 44 includes a confidence determination model 74, which determines a confidence level 76. The confidence level 76 preferably is determined by comparing the generated drag force 70, which is also referred to as measured drag and is normalized with respect to a speed 78 of the vehicle 12 as indicated by a vehicle-based sensor 30, with an expected drag 80. The expected drag 80 is determined using the tire pressure from the tire sensor unit 26, the tire type from the tire ID from the tire sensor unit, and the wear state of the tire 14, which is determined as described above. Additional data sources 34 from a remote Internet or cloud-based processor 56 preferably are also employed in the determination of expected drag 80, including road weather information, as indicated by a road condition and an amount of moisture on the road, and vehicle-to-vehicle (V2V) status information, which may include activation of ABS and/or wiper blades on other vehicles in the same geographic area.

Optionally, an in-tire accelerometer of the tire sensor unit 26 may be employed to evaluate deflection of the tire 14, which may improve the detection capability of the warning module 44 and the redundancy of the hydroplaning detection system 10. Other vehicle-based sensors 30, including a camera to recognize water spray, may optionally be employed to add redundancy to the hydroplaning detection system 10.

The confidence determination model 74 preferably employs a probability distribution analysis, and more preferably a Gaussian function, to determine the confidence level 76 from a comparison of the measured drag 70 and the expected drag 80. The confidence level 76 is input into a hydroplaning detection logic 82, as will be described in greater detail below.

In the warning module 44, the expected slip 66, grip utilization 68, drag force 70, and calculated slip 72 are input into the hydroplaning detection logic 82 to generate a hydroplaning detection flag or warning 84 to indicate a full hydroplaning, partial hydroplaning, or no hydroplaning situation, as shown and described in U.S. Patent Application Serial Number 63/608,866 entitled "Systems and Methods for Hydroplaning Detection" and filed on December 12, 2023.

In the hydroplaning detection system 10 of the invention, the confidence level 76 is also input into the hydroplaning detection logic 82. The addition of the confidence level 76 enables the hydroplaning detection logic 82 to employ a threshold adaptation 86. The threshold adaptation 86 based on the confidence level 76 enables the hydroplaning detection flag or warning 84 of a full hydroplaning, partial hydroplaning, or no hydroplaning situation to be accompanied by a warning confidence level 88. The warning confidence level 88 thus communicates the probability of the warning 84, which improves the accuracy and robustness of the hydroplaning detection system 10.

In addition, when the confidence level 76 is high, the value of the threshold adaptation 86 may be relaxed, which improves the ability of the warning module 44 to detect a partial hydroplaning situation and to reduce the time required to detect a partial or full hydroplaning situation. The warning 84 and the warning confidence level 88 may be communicated from the warning module 44 through the CAN bus system 28 to one or more vehicle control systems 106 and/or to an operator of the vehicle 12 that the tire 14 for appropriate action, as will be described in greater detail below.

Returning to Figure 3, the assistance module 46 of the hydroplaning detection system 10 provides the capability to assist the operator of the vehicle 12 when a hydroplaning warning 84 is generated. General hydroplaning assistance is shown and described in U.S. Patent Application Serial Number 63/608,866 entitled "Systems and Methods for Hydroplaning Detection" and filed on December 12, 2023. As described in U.S. Patent Application Serial Number 63/608,866, when a warning of a full hydroplaning or partial hydroplaning situation is generated, recommendations are communicated to one or more vehicle control systems and/or to an operator of the vehicle for specific actions to be taken, which are different for full hydroplaning and partial hydroplaning situation.

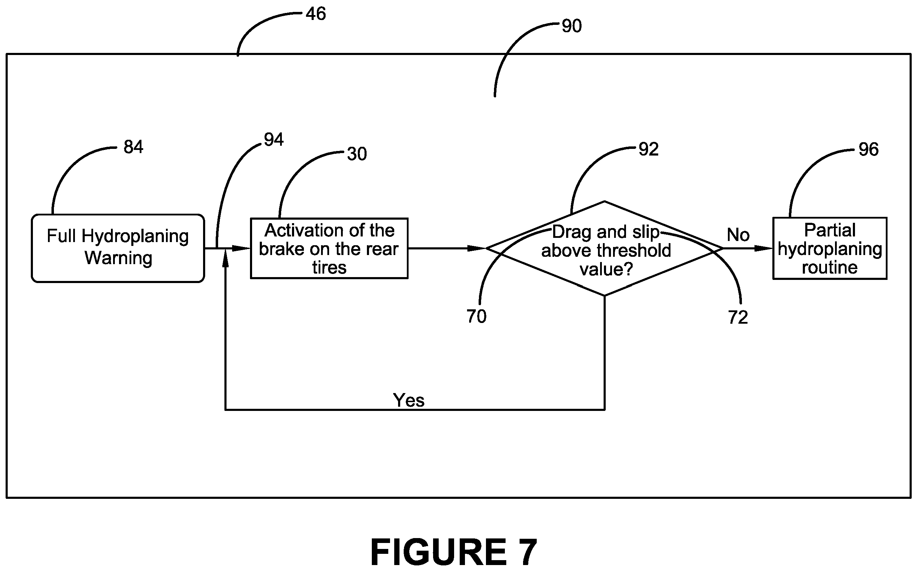

With additional reference to Figure 7, the assistance module 46 of the hydroplaning detection system 10 includes a hydroplaning status check 90. More particularly, when the warning 84 is for full hydroplaning, recommendations are communicated to one or more vehicle control systems 106 and/or to an operator of the vehicle 12 for specific actions to be taken based on the full hydroplaning situation, which are referred to as full hydroplaning actions 94. In the event that a full hydroplaning situation shifts to a partial hydroplaning situation, the recommendations for the vehicle control systems 106 and/or the operator of the vehicle 12 should be adjusted accordingly.

In the hydroplaning status check 90 of the assistance module 46, after the warning 84 is for full hydroplaning and full hydroplaning actions 94 are recommended, a check of vehicle-based sensors 30 is performed. Because a full hydroplaning action 94 is activation of the brake on the rear tires of the vehicle 12, when the check of the vehicle-based sensors 30 indicates activation of the brake on the rear tires of the vehicle 12, a drag and slip decision 92 is executed. In the decision 92, the drag force 70 and the calculated slip 72 are compared to predetermined threshold values.

If the drag force 70 and the calculated slip 72 are above the threshold values, the full hydroplaning actions 94 remain in place and a check of vehicle-based sensors 30 is performed again. If the drag force 70 and the calculated slip 72 are below the threshold values, the full hydroplaning situation has shifted to a partial hydroplaning situation, and recommendations are communicated to one or more vehicle control systems 106 and/or to an operator of the vehicle 12 for specific actions to be taken based on the partial hydroplaning situation, which are referred to as partial hydroplaning actions 96. In this manner, the hydroplaning status check 90 of the assistance module 46 adjusts full hydroplaning actions 94 to partial hydroplaning actions 96 when a full hydroplaning situation shifts to a partial hydroplaning situation.

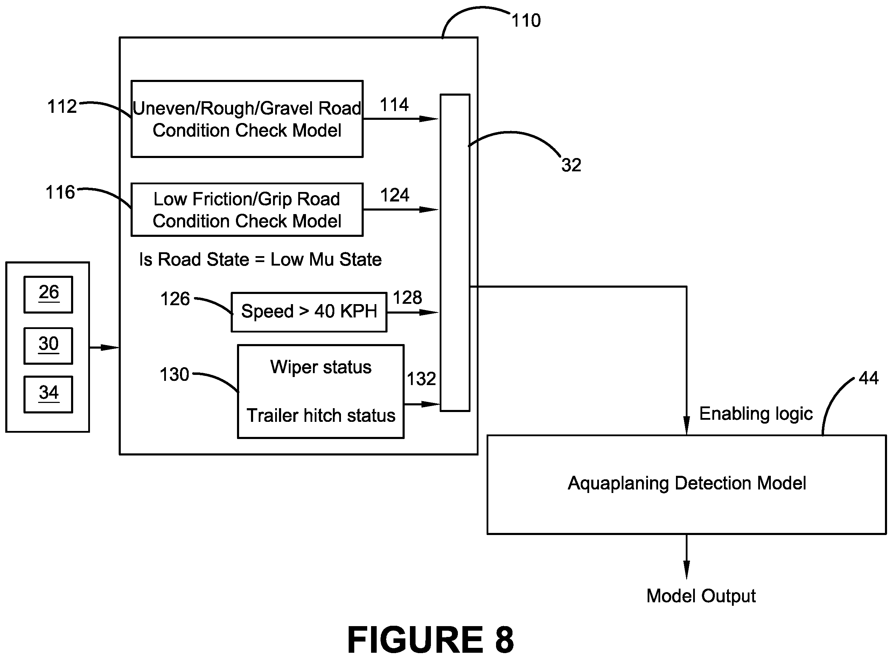

With reference to Figures 3 and 8, a precheck module 110 of the hydroplaning detection system 10 is shown, which is an optional feature of the system. The precheck module 110 may be employed to avoid false triggering of the warning module 44. More particularly, as described above, the warning module 44 identifies hydroplaning conditions by analyzing the drag force 70 experienced by the tire 14. The precheck module 110 enables differentiation between high drag forces 70 caused by factors other than hydroplaning, such as snow on the road, and actual hydroplaning situations. The precheck module 110 also reduces false indications of hydroplaning that may be caused by signal noise due to operating the vehicle 14 on rough or gravel roads, which may interfere with some vehicle-based sensors 30, such as wheel speed indicators.

The precheck module 110 receives data from the tire sensor units 26, vehicle-mounted sensors 30, and additional data sources 34, as will be described in greater detail below. The precheck module 110 preferably includes a rough road detection module 112. The rough road detection module 112 receives signals from vehicle-based sensors 30, such as vertical chassis acceleration and wheel speed, and reviews the variance of the signals. If the variance of the vertical chassis acceleration and/or wheel speed signals is above a predetermined threshold, the road is likely to be uneven or rough, and the road detection module 112 communicates a decision 114 to the processor 32 to disable the warning module 44 in order to avoid misdetection.

The precheck module 110 preferably also includes a low friction review module 116. The low friction module 116 assesses if the vehicle 12 is driving in low friction conditions, which may falsely trigger the warning module 44. To avoid such false triggers, the low friction module 116 evaluates the road conditions, focusing on identifying low friction scenarios.

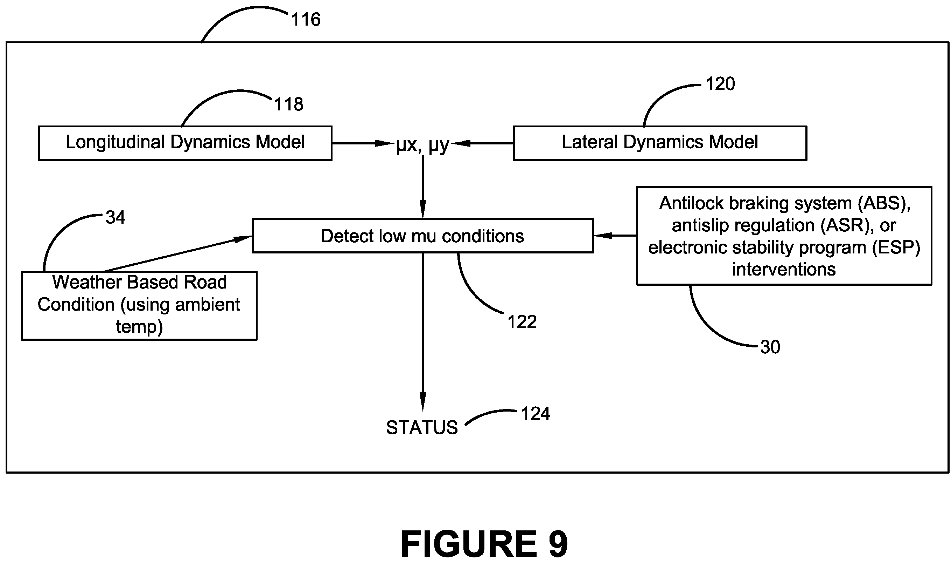

With additional reference to Figure 9, the low friction module 116 preferably includes a longitudinal dynamics model 118 and a lateral dynamics model 120, which respectively determine a longitudinal coefficient of friction µx and a lateral coefficient of friction µy. Examples of dynamics models that may be used for the longitudinal dynamics model 118 and the lateral dynamics model 120 are shown and described in U.S. Patent Numbers 9,340,211 and 8,983,749, which are owned by the same Assignee as the instant Application, The Goodyear Tire & Rubber Company, and which are incorporated herein in their entireties.

The longitudinal coefficient of friction µx and the lateral coefficient of friction µy are input into a low coefficient of friction indicator 122. Conditions of the vehicle 12 as detected by vehicle-mounted sensors 30 may also be input into the low coefficient of friction indicator 122. More particularly, antilock braking system (ABS), antislip regulation (ASR), or electronic stability program (ESP) interventions may be input into the low coefficient of friction indicator 122. Additional data sources 34 may also be input into the low coefficient of friction indicator 122, including road weather information, as indicated by a road condition, an amount of moisture on the road, and/or ambient temperature.

The low coefficient of friction indicator 122 determines if the road state indicates a low road friction scenario, rather than a hydroplaning situation, based on a low longitudinal coefficient of friction µx, a low lateral coefficient of friction µy, low road temperature, high humidity, and interventions indicated by the vehicle-mounted sensors 30. If the low coefficient of friction indicator 122 determines if the road state indicates a low road friction scenario, rather than a hydroplaning situation, the indicator causes the low friction module 116 to communicate a decision 124 to the processor 32 to disable the warning module 44.

Returning to Figure 8, the precheck module 110 preferably includes a speed detection module 126. The speed detection module 126 receives a vehicle speed signal from the vehicle-based sensors 30. If the vehicle speed is below a predetermined threshold, the speed detection module 126 communicates a decision 128 to the processor 32 to disable the warning module 44. In this manner, speed detection module 126 ensures actuation of the warning module 44 at higher speeds, thereby avoiding misdetections at lower speeds.

The precheck module 110 may optionally include an additional vehicle check module 130. The vehicle check module 130 may receive signals from vehicle-based sensors 30, such as a windshield wiper status and/or a trailer status. If the status is negative, hydroplaning situations may be unlikely. Thus, when the status is negative, the vehicle check module 130 communicates a decision 132 to the processor 32 to disable the warning module 44 to avoid misdetection.

As shown in Figures 2 and 3, the notifications 54 and 62, the warnings 84, the warning confidence level 88, the full hydroplaning actions 94, and the partial hydroplaning actions 96 may be output from the hydroplaning detection system 10 through the CAN bus system 28 into one or more vehicle control systems 106. For example, this information may be input into vehicle control systems 106 that include antilock braking systems (ABS), traction control systems, suspension control systems, steering control systems, and the like, which may be actuated to improve handling and performance of the vehicle 12. Such vehicle control systems 106 may be employed on any vehicle, including driver-operated vehicles, driver-assisted vehicles, and autonomous vehicles.

Turning to Figure 10, the hydroplaning detection system 10 may be stored on or in electronic communication with a local, vehicle-mounted processor 32 or a remote Internet or cloud-based processor 98, with wireless data transmission 100 between the vehicle 12 and the cloud-based processor. The notifications 54 and 62, the warnings 84, the warning confidence level 88, the full hydroplaning actions 94, and the partial hydroplaning actions 96 may be wirelessly transmitted 102 from the cloud-based processor 98 to a display device 104 that is accessible to a user of the vehicle 12, such as a smartphone, or to a fleet manager, and/or may be wirelessly transmitted 108 from the vehicle CAN bus 28 to the display device.

In this manner, the hydroplaning detection system 10 employs data from multiple sources to accurately and reliably detect hydroplaning situations in real time. More particularly, the hydroplaning detection system 10 employs information from vehicle-based sensors 30 through the CAN bus system 28, which is enriched with information from the tire sensor unit 26 and additional information 34 to accurately, robustly and quickly detect hydroplaning situations. The hydroplaning detection system 10 also determines the confidence level based on inputs, thereby improving the accuracy of the system.

When hydroplaning is detected by the system 10, the system provides notification to vehicle control systems 106, such as antilock braking systems (ABS), traction control systems, suspension control systems, steering control systems, and the like, which may be actuated to improve handling and performance of the vehicle 12. The hydroplaning detection system 10 may also provide a notification or alert to a driver or operator of the vehicle when hydroplaning occurs, enabling the driver to adjust vehicle operating conditions, such as vehicle speed, to improve handling and performance of the vehicle 12.

The present invention also includes a method for detecting hydroplaning. The method includes steps in accordance with the description that is presented above and shown in Figures 1 through 10.

It is to be understood that the structure of the above-described hydroplaning detection system 10 and the steps of the accompanying method may be altered or rearranged, or components or steps known to those skilled in the art omitted or added, without affecting the overall concept or operation of the invention. For example, electronic communication may be through a wired connection or wireless communication without affecting the overall concept or operation of the invention. Such wireless communications may include radio frequency (RF) and Bluetooth^{®} communications. In addition, vehicle and tire characteristics other than those described above and known to those skilled in the art may be employed, without affecting the overall concept or operation of the invention. Moreover, while examples of statistical analysis techniques are provided above, any applicable technique known to those skilled in the art may be employed without affecting the overall concept or operation of the invention.

## Claims

1. A hydroplaning detection system (10) for a vehicle (12), the vehicle (12) being supported by at least one tire (14) and including a communication system (28), the hydroplaning detection system (10) comprising:
a processor (32) being configured for electronic communication with the communication system (28); and
a warning module (44) being configured for electronic communication with the processor (32),
the warning module (44) being configured to receive data from vehicle-based sensors (30) that are in electronic communication with the communication system (28) and to generate an expected slip, a grip utilization, a drag force, and a calculated slip,
the warning module (44) being configured to receive data from a tire sensor unit (26) that is configured for electronic communication with the communication system (28),
the warning module (44) being configured to determine a confidence level by comparing the generated drag force to an expected drag,
the warning module (44) including a hydroplaning detection logic (82) that is configured to receive the expected slip, the grip utilization, the drag force, the calculated slip, and the confidence level and to generate a hydroplaning detection warning and a warning confidence level, and
the warning module (44) being configured to communicate the warning and the warning confidence level to at least one of a vehicle control system and an operator of the vehicle (12) for action by the at least one of the vehicle control system and the operator of the vehicle (12).

2. The hydroplaning detection system of claim 1, wherein the expected drag is determined from a tire pressure indicated by the tire sensor unit (26), a tire type from a tire identification from the tire sensor unit (28), and a wear state of the tire (14).

3. The hydroplaning detection system of claim 1 or 2, wherein the expected drag is determined from at least one of:
road weather information indicated by at least one of a road condition and an amount of moisture on a road; and
vehicle-to-vehicle status information, including activation of at least one of an anti-lock braking system and wiper blades on other vehicles.

4. The hydroplaning detection system of at least one of the previous claims, wherein the confidence level determination includes a probability distribution analysis.

5. The hydroplaning detection system of at least one of the previous claims, wherein the warning indicates a full hydroplaning situation or a partial hydroplaning situation.

6. The hydroplaning detection system of at least one of the previous claims, further comprising an assessment module (38) in electronic communication with the processor (32), wherein the assessment module (38) is configured to receive data from the tire sensor unit (26) and wherein, if the data from the tire sensor unit (26) is outside a recommended range, the assessment module (38) is configured to communicate a notification to at least one of the vehicle control system and the operator of the vehicle (12) for action by the at least one of the vehicle control system and the operator of the vehicle (12).

7. The hydroplaning detection system of at least one of the previous claims, further comprising a prediction module (40) in electronic communication with the processor (32), wherein the prediction module (40) is configured to receive data from the tire sensor unit (26) and from additional data sources, wherein the prediction module (40) is configured to determine if hydroplaning is likely from an assessment of the data from the tire sensor unit (26) and from additional data sources relative to predetermined threshold values, and, when the prediction module (40) determines that hydroplaning is likely, the prediction module is configured to generate a safe speed notification to at least one of the vehicle control system and the operator of the vehicle (12) for action by the at least one of the vehicle control system and the operator of the vehicle (12).

8. The hydroplaning detection system of at least one of the previous claims, wherein the data from the tire sensor unit (26) includes a pressure of the tire (14) and/or wherein the data from the tire sensor unit (26) includes data for a determination of tire load.

9. The hydroplaning detection system of at least one of the previous claims, wherein the data from the tire sensor unit (26) includes tire identification data and prior hydroplaning characteristic data for tires of a same type as the tire (14) supporting the vehicle (12) is identified from the tire identification data; and/or wherein the data from the tire sensor unit (26) includes data for a determination of a wear state of the tire (12).

10. The hydroplaning detection system of at least one of the previous claims, wherein the additional data sources include at least one of road weather information indicated by at least one of a road condition and an amount of moisture on a road, and vehicle-to-vehicle status information, including activation of at least one of an anti-lock braking system and wiper blades on other vehicles.

11. The hydroplaning detection system of at least one of the previous claims, further comprising an assistance module (46) in electronic communication with the processor (32),
wherein, when the hydroplaning detection warning is for a full hydroplaning situation, the assistance module (46) is configured to detect activation of a brake on rear tires from a review of the data from the vehicle-based sensors;
wherein, when the activation has occurred, the assistance module (46) is configured to compare the drag force and the calculated slip to threshold values; and
wherein, when the drag force and the calculated slip are below the threshold values, the assistance module (46) is configured communicate recommendations for partial hydroplaning actions to at least one of the vehicle control system and the operator of the vehicle (12) for action by the at least one of the vehicle control system and the operator of the vehicle (12).

12. The hydroplaning detection system of at least one of the previous claims, further comprising a precheck module (110) in electronic communication with the processor (32),
wherein the precheck module (110) includes a rough road detection module (112) receiving signals from the vehicle-based sensors (30), the signals including at least one of a vertical chassis acceleration and a wheel speed;
wherein the rough road detection module (112) is configured to compare a variance of the signals to a predetermined threshold; and
wherein, when the variance of the signals exceeds the predetermined threshold, the road detection module (112) is configured to communicate a decision to the processor (32) to disable the warning module (44).

13. The hydroplaning detection system of at least one of the previous claims, wherein the precheck module (110) includes a low friction review module (116), the low friction review module (116) being configured to:
determine a longitudinal coefficient of friction and a lateral coefficient of friction;
receive interventions from the vehicle-based sensors (30);
receive additional data, the additional data including at least one of a road condition, an amount of moisture on the road, and an ambient temperature;
determine from the longitudinal coefficient of friction, the lateral coefficient of friction, the interventions, and the additional data if a low road friction situation has occurred; and
when a low road friction situation has occurred, communicate a decision to the processor (32) to disable the warning module (44).

14. The hydroplaning detection system of at least one of the previous claims, wherein the precheck module (110) includes include at least one of:
a speed detection module (126) being configured to receive a vehicle speed signal from the vehicle-based sensors (30), and when, the vehicle speed is below a predetermined threshold, the speed detection module being configured to communicate a decision to the processor (32) to disable the warning module (44); and
a vehicle check module (130) being configured to receive status signals from vehicle-based sensors (30) including at least one of a windshield wiper status and a trailer status, and, when the status signals are negative, the vehicle check module being configured to communicate a decision to the processor (32) to disable the warning module (44).

15. A hydroplaning detection method for use with a vehicle (12), the vehicle (12) being supported by at least one tire (14) and including a communication system (28), the hydroplaning detection method comprising:
providing a processor (32) in electronic communication with the communication system (28); and
providing a warning module (44) in electronic communication with the processor (32),
wherein the warning module (44) receives data from vehicle-based sensors (30) that are in electronic communication with the communication system (28) and generates an expected slip, a grip utilization, a drag force, and a calculated slip,
wherein the warning module (44) receives data from a tire sensor unit (26) in electronic communication with the communication system (28),
wherein the warning module (44) determines a confidence level by comparing the generated drag force to an expected drag,
wherein the warning module (44) includes a hydroplaning detection logic (82) that receives the expected slip, the grip utilization, the drag force, the calculated slip, and the confidence level and generates a hydroplaning detection warning and a warning confidence level, and
wherein the warning module (44) communicates the warning and the warning confidence level to at least one of a vehicle control system and an operator of the vehicle (12) for action by the at least one of the vehicle control system and the operator of the vehicle (12).
